# EUROPEAN PATENT SPECIFICATION

(11) **EP 4 240 213 B1**
(45) Date of publication and mention of the grant of the patent: **23.10.2024**
(21) Application number: 21802344.8
(22) Date of filing: 02.11.2021
(51) Int. Cl.: A47J 31/36, A47J 31/44, A47J 31/46

(54) **COFFEE BREWING APPARATUS**
KAFFEEBRÜHVORRICHTUNG
APPAREIL D'INFUSION DE CAFÉ

(30) Priority: 03.11.2020 EP 20205487
(43) Date of publication of application: 13.09.2023
(73) Proprietor: Société des Produits Nestlé S.A., 1800 Vevey (CH)
(72) Inventor: FLICK, Jean, Marc, 1405 POMY (CH); CALDERONE, Roberto, Angelo, 1350 Orbe (CH); BLUNIER, Jean, Daniel, 1470 Estavayer-le-Lac (CH)
(74) Representative: Ducreux, Marie
(86) International application number: PCT/EP2021/080387
(87) International publication number: WO 2022/096457

(56) References cited:
- JP-A- 2011 167 393
- US-A1- 2006 065 128

## Description

### Field of the invention

The present invention relates to an apparatus for preparing coffee beverages. In particular, it relates to a fully automatic coffee apparatus.

### Background of the invention

Generally, in full automatic coffee machines, coffee is prepared in a brewing chamber configured to receive a quantity of coffee powder, to compress said quantity of coffee by means of at least one movable piston and to introduce pressurized water to brew the compressed coffee powder. Finally, the extracted coffee beverage flows out from an outlet of the brewing chamber into a drinking cup.

Various types of brewing chambers have been developed for full automatic coffee machines. One type is called "bottom-up" brewing chamber and concerns a brewing chamber wherein water is introduced through the bottom of the chamber and the brewed coffee beverage is evacuated through the top of the brewing chamber.

This type of bottom-up brewing chambers present one disadvantage that results from the fact that the brewed coffee cannot be completely evacuated from the brewing chamber and that a small quantity of residual liquid remains in the brewing chamber and is collected at the bottom of the chamber.

If not evacuated, this residual liquid impacts the quality of the next brewed coffee since this residual liquid is mixed with the next coffee beverage prepared in the brewing chamber. The usual manner to evacuate this residual liquid is to drain it through the water pipe configured to introduce water inside the brewing chamber and usually positioned at the bottom of the brewing chamber. This water pipe usually comprises a three-way valve enabling the connection of the water inlet of the brewing chamber either with a hot water supply or with a liquid drain. This valve enables the introduction of hot water from the hot water supply inside the brewing chamber during the coffee preparation and then the evacuation of the residual liquid from the brewing chamber to the liquid drain after the coffee preparation. This configuration is implemented in WO2016116981wherein it is recognized that with this implementation other problems are created. Actually, since the residual liquid comprises coffee extract and particles, some residues settle in the pipe extending between the water inlet of the brewing chamber and the three-way valve and after a certain time clog the water pipe. In addition, these residues impact the quality of hot water introduced inside the brewing chamber and the quality of the coffee beverage.

The cost of the three-way valve is not worth in view of theses disadvantages.

With the aim to evacuate residual liquid from a bottom-up brewing chamber, EP3545801 deals with residual water obtained from the squeezing out of brewed coffee grounds from a brewing chamber. The solution consists in producing a drainage outlet between the piston rod and the hole for this rod provided at the bottom of the chamber.

One important problem of this solution relates to the liquid flowing under the piston rod and the bottom of the chamber and splashing through the internal parts of the machine. Actually this prior art does not explain how the residual liquid is collected within the machine. Moreover, there is doubt that the connection between the conical shape of the rod and the hole at the bottom of chamber is configured to enable a tight closure when the bottom is closed. It is expected that the deposits of coffee extracts and fines on the seal and the It on the edge of the hole at the bottom chamber will build up and that tightness will not be guaranteed any longer without a regular cleaning which requires the full dismantling of the chamber.

When brewing roasted & ground (R&G) coffee, optimal quality of the coffee beverage is directly linked to the precise temperature of the water used during the extraction. A well-known problem is the preparation of the first cup of coffee, end even sometimes the second cup, after a certain period of non-use of the machine. Due to the thermal inertia of the brewing chamber itself and the presence of stagnant water inside the water pipes, the temperature of the first cup is never the required temperature for the brewing operation and the quality of the firs cup is poor, often the second cup too.

To solve this problem, different solutions have been proposed such as dispensing one or two coffees of pour quality to heat the chamber. Yet such a solution spills coffee and cannot be implemented in a self-service coffee beverage apparatus ; an operator must be present to pour this coffee down the sink.

In another solution, there are provided heating means inside the brewing chamber itself like in EP1009270 where an electric heating resistance was embedded inside the body of the chamber. This solution presents several drawbacks. First, this requires a complex construction of the chamber and a less easier maintenance of the chamber. Then, this solution does not enable the heating of residual water that stagnates in water supply line meaning the first cup is never prepared at the optimal temperature. In addition, the relatively hot temperature of the walls of the chamber modifies the viscosity of coffee inside the chamber and directly impacts the quality of the prepared coffee. Lastly, the energetic consumption of such an electrically heated chamber is high.

Another solution consists in introducing hot water inside the brewing chamber to heat the water pipeline and the brewing chamber to the required temperature and then evacuating said heating water before the first cup of coffee is prepared. WO2020082190 describes such a solution : heating hot water is evacuated through the water pipeline and a three-way valve evacuating said water to the drain based on the same fluid line supply construction as WO2016116981 mentioned above. But again this solution requires the use of a three-way valve with its related costs and maintenance. Another coffee machine of the prior art is disclosed in US2006/065128.

An object of the invention is to address at least some of the drawbacks of the prior art bottom-up brewing chambers or at least to provide an alternative thereto.

In particular, an object of the present invention is to provide a full automatic coffee machine comprising a bottom-up brewing chamber enabling the evacuation of residual liquid.

It would be advantageous to provide a full automatic coffee machine comprising a bottom-up brewing chamber enabling the evacuation of residual liquid without contaminating the water supply line.

It would be advantageous to provide a full automatic coffee machine comprising a bottom-up brewing chamber enabling the evacuation of residual liquid without the use of a costly three-way valve.

It would be advantageous to provide a full automatic coffee machine comprising a bottom-up brewing chamber enabling the preparation of first cups with the same quality as the other cups.

It would be advantageous to provide a full automatic coffee machine comprising a bottom-up brewing chamber enabling the preparation of first cups with the same quality as the other cups without spilling coffee or electrical energy.

### Summary of the invention

In a first aspect of the invention, there is provided a full automatic coffee machine comprising a coffee extraction unit, said coffee extraction unit comprising :
- a brewing chamber for receiving roasted and ground coffee powder, said chamber comprising an upper rim, a bottom wall and a water inlet,
- an upper piston,
   . said upper piston being configured to be movable through the upper rim of the brewing chamber and inside the brewing chamber further to the relative movement of the brewing chamber and the upper piston, and
   . said upper piston comprising a liquid outlet duct,
- a lower piston movable inside said brewing chamber between :
   . a lowest position wherein the lower piston lies on the bottom wall of the brewing chamber, and
   . a highest position wherein the lower piston is at the upper rim of the brewing chamber,
- wherein the lower piston comprises a piston rod, said piston rod extending through the bottom wall of the brewing chamber, and

wherein the piston rod comprises an internal channel extending from a channel inlet at the lateral wall surface of the rod to a channel outlet at the bottom wall surface of the rod, and
wherein the channel inlet is designed and positioned on the lateral wall surface of the rod so that said channel inlet overlaps the bottom wall of the brewing chamber when the lower piston is in the higher position only.

The coffee machine comprises a brewing chamber that is configured to implement a bottom-up extraction. The chamber is designed and oriented along a longitudinal axis. This axis can be oriented substantially vertically or inclined for example by an angle of up to 30° with vertical. During extraction, water is introduced through the bottom of the chamber and extracted coffee is dispensed through the top of the chamber.

The brewing chamber defines an internal volume configured for receiving a dose of roasted and ground coffee powder, preferably roast & ground coffee, to be extracted. Usually, the chamber presents a cylindrical shape with a lateral wall extending from a bottom wall up to an upper rim. The longitudinal axis of the cylindrical shape is preferably oriented substantially vertically.

The top of the brewing chamber is opened to enable the introduction of the coffee powder to be extracted.

The brewing chamber comprises a water inlet configured to introduce water inside the chamber to extract coffee powder present inside the chamber. Usually, this water inlet is positioned inside the lateral wall of the chamber, preferably close to the bottom wall.

The coffee machine comprises two pistons able to move through the internal volume of the chamber.

The first piston is able to move through the upper part of the chamber and is called the upper piston.

This upper piston is designed to be able to be movable through the upper rim of the brewing chamber and inside the brewing chamber further to the relative movement of the brewing chamber and the upper piston. This upper piston is designed to enable the compression of the coffee powder present inside the chamber.

This upper piston comprises a liquid outlet duct. This duct enables the dispensing of extracted beverage, preferably coffee, from the chamber. Usually, this duct extends from the piston to a nozzle for dispensing the beverage in a cup.

The second piston is called the lower piston.

The lower piston is movable inside the brewing chamber between two end positions. One end position is the lowest position of the second piston inside the chamber. In this lowest position, the head of the lower piston lies on the bottom wall of the brewing chamber. Generally, the lower piston is positioned in this lower position during the operation of introducing coffee powder inside the chamber and during the operation of extracting coffee powder with water.

The other end position is the highest position of the second piston inside the chamber. In this higher position, the upper surface of the head of the lower piston is at the upper rim of the brewing chamber. Generally, the lower piston is positioned in this higher position during the operation of evacuating the extracted coffee powder from the chamber.

The lower piston comprises a head and a rod.

Usually the head presents water openings configured to introduce water from the water inlet upwards and to the coffee powder compressed inside the chamber between the upper and lower pistons.

The lower piston is assembled to the brewing chamber so that its piston rod extends through an opening in the bottom wall of the brewing chamber, the bottom free end of the rod being located outside the chamber. The piston rod is configured to move up and down inside the opening.

This rod comprises an internal channel extending from a channel inlet at the lateral wall surface of the rod to a channel outlet at the bottom wall surface of the rod. This channel creates a fluid passage for a liquid in contact with the lateral surface of the rod down to a place below the bottom end of the rod.

The inlet of this channel is designed and positioned on the lateral wall surface of the rod so that the inlet overlaps the bottom wall of the brewing chamber when the lower piston is in the higher position only.

Consequently, when the lower piston is in its highest position enabling the evacuation of extracted coffee, the channel inlet creates an opening at the bottom of the chamber for evacuating any residual liquid collected at the bottom of the chamber. In this highest position, the lower piston enables simultaneously evacuation of coffee cake and evacuation of residual liquid.

The residual liquid is not evacuated by the water inlet, it does not remain in a part of the water supply pipe or at the bottom of the chamber, accordingly the next coffee beverage prepared in the brewing chamber is extracted with optimal quality.

Usually, the machine comprises a waste liquid collector and the channel outlet at the bottom wall surface of the rod is connected to said waste liquid collector, for example a drip tray.

Consequently, residual liquid flows directly to the collector of waste liquids through a dedicated pipe connection and without flowing contaminating other pipes or parts of the machine like the surfaces of contact of the rod and the opening at the bottom of the chamber or the external surface of the rod of the lower piston.

The machine comprises a supporting frame on which the brewing chamber is mounted.

The relative movements of the brewing chamber and the two pistons can be implemented indifferently by :
- keeping the brewing chamber fixed to the supporting frame and actuating the pistons inside and/or out the chamber,
   and/or
- actuating the brewing chamber relatively to the supporting frame while the pistons remain fixed or are passively driven by the movement of the chamber that holds them.

In one preferred embodiment, the brewing chamber is made movable by driving means. The driving means can be a rack or any other known means.

Within this embodiment, preferably :
- the upper piston is fixed,
- the rod of the lower piston comprises a free bottom end located outside the brewing chamber and movable with said piston and said chamber,
- the apparatus comprises a fixed bottom stop wall able to contact with the bottom end of the rod of the lower piston,
- the movement of the lower piston depends on the movement of the brewing chamber and/or the contact of the free bottom end with the bottom stop wall or the contact of the lower piston with the upper piston.

Preferably, in this preferred embodiment, the lower piston is free from guiding means, from retaining means and from springs meaning that the lower piston is passive and there is no active means to change the position of lower piston with respect of the brewing chamber.

Preferably, in this preferred embodiment, the rod and/or the lower piston are provided with friction means to control their movement with respect to the internal walls of the brewing chamber. These means enable the lower piston to be maintained in one position with respect to the brewing chamber.

Preferably, in this preferred embodiment, the fixed bottom stop wall comprises a channel configured to connect the channel outlet of the internal channel of the rod with a draining pipe. The draining pipe can be configured to conduct water liquid to a drip tray or any drain part of the apparatus.

In an alternative embodiment, the brewing chamber can be mounted fixed in the machine and the upper and lower pistons can be made movable inside and out of the brewing chamber by driving means.

Generally the coffee extraction unit comprises a discharge device for extracted coffee powder (coffee cake). This discharge device is designed to swipe the area above the upper rim of the chamber by any rotation or translation movement when the lower piston is positioned at its highest position

Generally the full automatic coffee machine comprises a pressurized hot water fluid system comprising at least a water supply, a water heating device and a water pump. This system is connected to the water inlet of the brewing chamber.

Accordingly, hot pressurized water is supplied to the brewing chamber for the extraction of roasted and ground coffee powder.

Generally, the full automatic coffee machine comprises a control system configured to :
- actuate the movement of the brewing chamber and/or the pistons,
- control the devices of the pressurized hot water fluid system.

In a **second aspect,** there is provided a method for preparing a coffee beverage with a full automatic coffee apparatus such as described above wherein said method comprises the steps of :
a- in a dosing position wherein the lower piston is in the lowest position and the upper piston is at a distance from the upper rim of the chamber and outside the chamber, supplying a dose of roasted and ground coffee powder into the brewing chamber, then
b- moving the chamber and the upper piston relatively one to the other to compress the dose of coffee powder, then
c - introducing hot water in the brewing chamber through the water inlet, extracting the coffee powder and dispensing extracted coffee beverage through the beverage outlet of the upper piston, then
d- moving the chamber, the upper piston and the lower piston relatively one to the other in order to :
   . position the upper rim of the chamber away from the upper piston, and
   . position the lower piston at the upper rim of the brewing chamber, and
   . discharging the extracted coffee powder from the lower piston, and
   . dispensing residual liquid present at the bottom of the chamber through the internal channel of the rod of the lower piston.

This method enables the evacuation of any liquid still present in the brewing chamber and collected at its bottom at the end of the coffee preparation. The evacuation of the liquid happens during the evacuation of the cake of coffee powder meaning no additional time in the global process of coffee preparation steps compared to the state of the art. The step of evacuation remains invisible compared to usual sequences.

At the beginning of step a), the brewing chamber is devoid of coffee.

Preferably, the method comprises after step d), at least one further step e) comprising the step of moving the chamber, the upper piston and the lower piston relatively one to the other in a closed position, wherein the lower piston is in the lowest position and the upper piston closes the chamber.

This closed position prevents the too rapid drop of temperature of the chamber after the preparation of coffee at step c). Due to the closed configuration of the chamber, the walls of the chamber remains warm and, if a new coffee is prepared, the temperature of the chamber is immediately adapted for an optimal preparation.

Preferably, this closed position is maintained until a new coffee beverage is ordered and, when it is the case, the chamber is moved to the dosing position in order to implement step a).

In one preferred embodiment, the method comprises at least one further step a₀) before step a) is implemented, this step a₀) comprising :
a₀) moving the chamber, the upper piston and the lower piston relatively one to the other in order to :
. position the upper rim of the chamber away from the upper piston, and
. position the lower piston at the upper rim of the brewing chamber, and
. introducing hot water through the water inlet in order to purge the hot water fluid line and dispensing said hot water through the internal channel of the lower piston.

During this step a₀), that is implemented before the steps a) to e) of the coffee preparation, the brewing chamber is placed in the position enabling simultaneously the introduction of water from the water inlet and the immediate evacuation of this introduced water from the chamber through the internal channel of the rod of the lower piston. As result, if no coffee has been extracted for a certain time and the temperature of water that stagnates inside the water pipe upstream the water inlet has decreased, then this water can be purged and evacuated before a coffee is prepared. Then the next coffee, prepared by implementation of steps a) to e), will be extracted with hot water at the right expected temperature rather than with a part of cold water.

The volume of hot water introduced in the brewing chamber depends on the dead volume of fluid in the specific water fluid line that is the volume of water that stagnates between the outlet of the water heating device and the water inlet of the brewing chamber and on the dead volume of fluid in the bottom part of the chamber.

In another preferred embodiment, the method can comprise further steps before step a) is implemented, these steps comprising :
a₁- moving the brewing chamber, the upper piston and the lower piston relatively one to the other in order to :
   . close the chamber with the upper piston, and
   . position the lower piston inside the brewing chamber so that the channel inlet of the internal channel is positioned below the bottom wall of the chamber, and
   . introducing hot water through the water inlet in order to fill at least a part of the internal volume of the brewing chamber defined between the upper piston and the lower piston, then
a₂- moving the chamber, the upper piston and the lower piston relatively one to the other in order to position the lower piston at the upper rim of the brewing chamber, in order to dispense said volume of hot water through the internal channel of the lower piston, then
a₃- moving the chamber, the upper piston and the lower piston relatively one to the other to the dosing position.

These steps enable the introduction of hot water in the brewing chamber devoid of coffee in order to preheat the chamber. In particular these steps can be implemented when no coffee beverage has been prepared in the brewing chamber for a certain time with the consequences that the brewing chamber and the water in the supply line are cold. Any first and even second coffee, prepared in such cold conditions, do not present the expected quality. This certain time between two preparations can differ from one machine to another depending on the materials the parts of the apparatus are made of and/or on the external environment of the machine (in a coffee shop, outside, depending on the geographical location too (cold or hot climate)).

In step a₁) hot water is introduced inside the empty chamber. The volume of hot water can depend on the materials the brewing chamber is made of. This volume can be made selectable by the operator in a setting menu of the coffee machine taking into account the environment of the machine or water savings. Preferably, the internal volume of the brewing chamber defined between the upper piston and the lower piston is smaller than the maximal internal volume of the chamber so that the quantity of hot water introduced for heating is not too important. This volume can be defined on case by case but must be sufficient to heat the chamber at a temperature similar to what would be obtained if a coffee beverage had just been prepared with the chamber.

Once hot water is introduced, it can be retained in the brewing chamber for a certain time in order to heat efficiently the brewing chamber and before step a₂) is implemented. This time can be made selectable by the operator in a setting menu of the coffee machine taking into account the environment of the machine or to accelerate the time length of the preparation.

In step a₂) the heating water is evacuated from the brewing chamber and preferably hot water is introduced in the chamber and immediately evacuated in order to purge the hot water line from the water that stagnates.

In a preferred embodiment step a₀) is implemented before step a₁) in order to guarantee the best pre-heating of the brewing chamber.

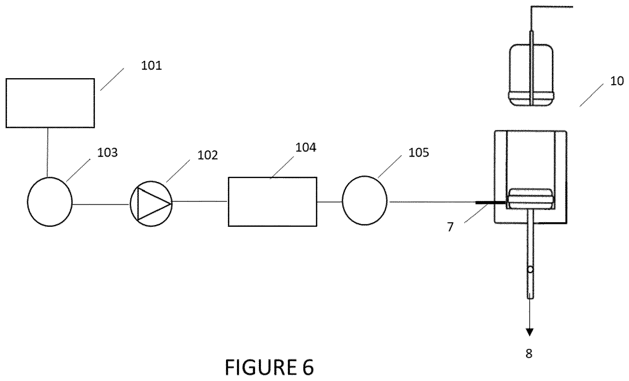

In the present application the terms "internal", "top", "bottom" and "lateral" are used to describe the relational positioning of features of the invention. These terms should be understood to refer to the devices in their normal orientation when positioned in a full automatic coffee apparatus for the production of a beverage as shown in the figures and in particular in Figure 6.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
- Figure 1A illustrates the hot water fluid system of a coffee extraction unit according to the state of the art,
- Figures 2 and 3 illustrate the coffee extraction unit of the full automatic coffee machine according to the present invention in two different operating steps,
- Figures 4A and 4B is a view and a cross section of a lower piston according to the invention,
- Figure 5 illustrates the steps of preparation of a coffee beverage with a coffee extraction unit such as described above,
- Figure 6 illustrates the hot water fluid system with a coffee extraction unit according to the invention,
- Figures 7 and 8 illustrate the steps that can be implemented before the steps of Figure 5 when no coffee beverage has been prepared for a certain period.

### Detailed description of exemplary embodiments

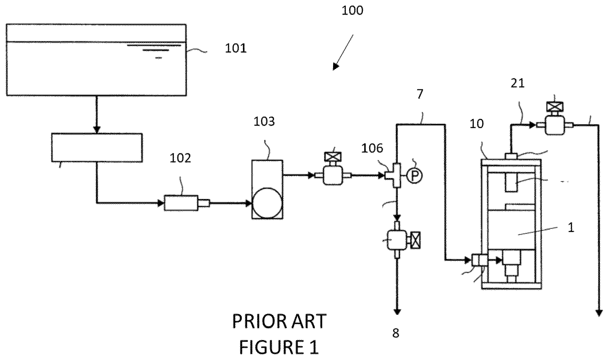

**Figure 1** illustrates the hot water supply line of the coffee extraction unit 10 according to the state of the art WO2016116981. The coffee extraction section corresponds to a bottom-up configuration wherein water is introduced at the bottom of the brewing chamber 1 and coffee beverage is dispensed at the top through line 21. The line comprises successively at least:
- a hot water tank 101,
- a pump 102
- a flowmeter 103,
- a final hot water fluid line 7 connected to the water inlet of the brewing chamber part of the coffee extraction unit 10.

The water pipe is never drained completely due to the curvature in the machine and is one of the identified cause of the too cold water entering in the brewing unit. This portion of pipe is estimated to contain approximately 2 ml of water.

In order to evacuate residual liquid retained at the bottom of the brewing chamber 1 after a coffee extraction, a three-way valve 106 is provided in the hot water supply line which enables the draining of residual liquid through the final hot water fluid line 7 down to the three-way valve 106 and then to the drain 8.

As mentioned in the above section "background of the invention", this draining through the final hot water fluid line 7 presents serious drawbacks.

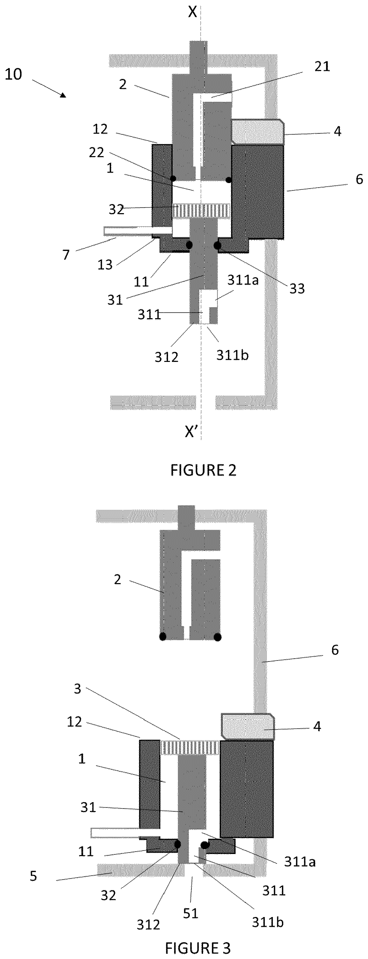

**Figures 2 and** 3 illustrate schematically the coffee extraction unit 10 of the full automatic coffee machine according to the present invention in two different operating steps.

In Figure 2, the coffee extraction unit 10 is represented in a step of coffee extraction or of pre-heating of the chamber, whereas in Figure 3, the coffee extraction unit 10 is represented in a step of evacuation of coffee cake at the end of the sequence of operations for the preparation of a coffee beverage.

The coffee extraction unit 10 comprises a brewing chamber 1 for receiving a dose of coffee powder, usually roasted and ground coffee. Preferably, the brewing chamber 1 is a cylinder with an open top extending from a bottom wall 11 to un upper rim along an axis XX' substantially vertical. The chamber 1 comprises a water inlet 13 to which a hot water fluid line is connected. The water inlet 13 is preferably positioned close to the bottom of the chamber such as inside the lower part of the lateral wall as illustrated in Figure 2 or optionally in the bottom wall.

The coffee extraction unit 10 comprises driving means 6 to move vertically the chamber 1 up and down For example, the chamber 1 can be mounted on a worm drive by motor means. Rotation of the worm causes vertical translation of the chamber.

The coffee extraction unit 10 comprises an upper piston 2. This upper piston 2 presents a lower end portion presenting a cylindrical design and having a diameter substantially equal to the diameter of the chamber so that the upper piston is able to pass through the upper rim 12 of the chamber and inside the brewing chamber further to the movement of the brewing chamber upwardly in direction of the upper piston. Accordingly, the upper piston enables the closure of the brewing chamber during the coffee extraction (Figure 2) and the compression of a dose of roasted and ground coffee powder introduced inside the brewing chamber.

Coffee powder can be introduced inside the chamber by means of a chute (not illustrated) guiding the dose of power in direction of the open top of the chamber.

In addition the upper piston 2 comprises a liquid outlet duct 21 extending from the bottom surface of the upper piston and connected to a coffee beverage dispensing line.

The coffee extraction unit 10 comprises a lower piston with a head 32 comprising water outlets 34 configured for distributing water introduced through the water inlet 11 in the bottom surface of compressed coffee positioned above the head of the lower piston (Figure 2). This head acts as water supplier. A water distributor (not illustrated) is positioned above to distribute water through the coffee powder.

This type of piston for bottom-up extraction where water is introduced by the bottom created a large dead volume at the bottom of the chamber and prevents the evacuation of all. It has been observed that up to 3 ml of water remain trapped at the bottom of the brewing chamber.

The head is disc-shaped and has a diameter substantially equal to the inner diameter of the chamber cylinder. The lower piston 3 comprises a rod 31 fixed to the bottom of the disc-shaped head 32 and that extends downwards. The piston 3 is assembled to the chamber with the rod 31 extending through an opening in the bottom wall of the chamber.

The rod 31 of the lower piston is free from guiding means, retaining means spring wherein the lower piston is co-axially movable with the brewing chamber and within said brewing chamber.

Usually a mesh filter (not illustrated) is placed at the upper surface of the head of the lower piston to retain coffee particles.

The lower piston 3 is movable inside the brewing chamber 1 between two end positions :
- a lowest position wherein the lower piston lies on the bottom wall 11 of the brewing chamber (Figure 2)
   and
- a higher position wherein the lower piston is at the upper rim 12 of the brewing chamber (Figure 3).

The coffee extraction unit 10 comprises a discharge device 4 to sweep away a coffee cake that has been extracted (Figure 3). It is positioned slightly above the upper rim of the brewing chamber. Coffee cake that has been swept away is stored in a cake receiving section.

In the present illustrated embodiment, the upper piston 2 is fixed. The lower piston 3 is co-axially movable :
- with the brewing chamber 1, which means that when the chamber 1 moves, it takes the lower piston simultaneously with it, and
- within the brewing chamber 1, which means that the lower piston can be moved at different positions inside the brewing chamber. The movement of the lower piston 3 inside the brewing chamber is driven by the contact of the disc-shaped member 32 of the piston rod against the upper piston 2 when the brewing chamber moves upwards and by the contact of the bottom end 312 of the piston rod of the lower piston against a bottom stop wall 5 when the brewing chamber moves downwards. When the lower piston 3 is stopped in its course upwardly by the upper piston 2, the continuous upwards movement of the chamber enables the relative movement of the piston 3 inside the chamber, the same happens with the bottom stop wall during the downwards movement of the chamber.

The rod 31 of the lower piston 3 comprises an internal channel 311 extending from a channel inlet 311a at the lateral wall surface of the rod to a channel outlet 311b at the bottom wall surface of the rod. This channel provides a fluid communication from the channel inlet 311a down to channel outlet 311b.

The channel inlet 311a is designed in size and shape and positioned on the lateral wall surface of the rod so that, when the lower piston 3 is in its higher position (Figure 3), then the channel inlet 311a crosses and faces the edge of the hole of the brewing chamber in which the rod is engaged, forming a liquid outlet. Consequently, in this higher position, any waste liquid present in the chamber is able to flow through the channel inlet 311a and down the channel 311 to the channel outlet 311b. In place of being evacuated through the water inlet 11, waste liquid is evacuated through the rod of the piston eliminating the problems of contamination of the water supply.

The bottom stop wall 5 comprises a channel 51 that cooperates with the channel outlet 311b of the rod connected to a tube to conduct waste liquid to a collector of waste liquid, such as drip tray.

The channel inlet 311a is designed in size and shape and positioned on the lateral wall surface of the rod so that, when the lower piston 3 is in the other operating position like coffee dosing, brewing, pre-heating, then the channel inlet 311a is positioned below the bottom wall 11 of the brewing chamber. Consequently, in the other positions (like the position illustrated in Figure 2), no liquid is able to blow through the channel inlet 311a.

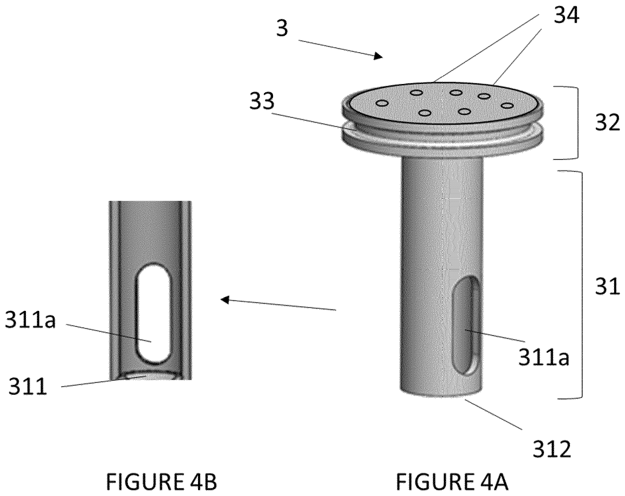

**Figure 4A** is a perspective view of such a lower piston 3. The disc-shaped head 32 comprises multiple water outlets 34 to distribute water through the surface of compressed coffee placed above. Usually a circular seal is positioned in the circumferential notch 33 to provide tightness during extraction.

**Figure 4B** is vertical cross section of the rod of the piston : it makes apparent that the rod 311 is empty which provides a channel 311 for waste liquid.

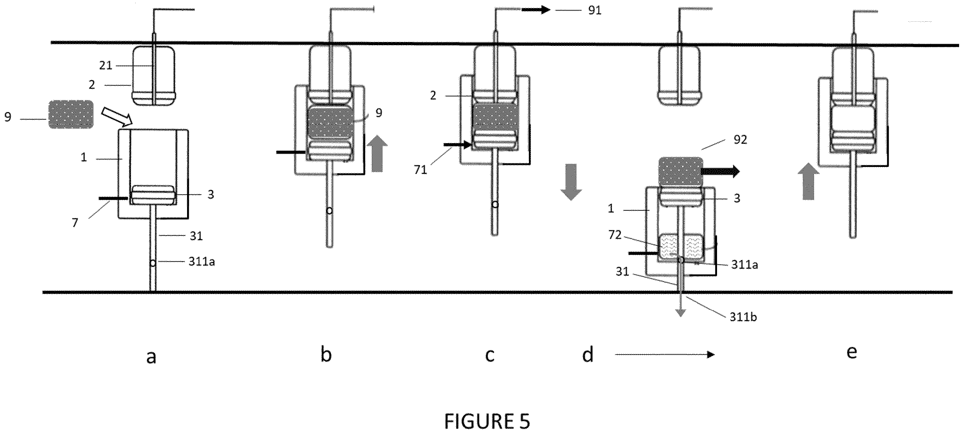

**Figure 5** illustrates the different steps of the method for preparing a coffee beverage with a full automatic coffee apparatus comprising a coffee extraction unit such as described above .

**Step a)** corresponds to a dosing operation where the chamber is in position O) wherein the lower piston 3 is in the lowest position inside the brewing chamber and the upper piston 2 is at a distance from the upper rim 12 of the chamber. In this position a dose of roasted and ground coffee powder can be introduced through the top of the brewing chamber.

In **step b)** the brewing chamber 1 and the upper piston 2 are moved one relatively to the other to compress the dose of coffee powder.

In **step c),** hot water is introduced in the brewing chamber through the water inlet 71, it is distributed by the head of the lower piston through the compressed coffee powder. Coffee powder is extracted and the extracted coffee beverage 91 is dispensed through the beverage outlet inside the upper piston.

Then in **step d),** the brewing chamber 1 is moved downwardly which has the effect of withdrawing the upper piston 2 from the chamber. During the downwards movement of the chamber, the bottom end of the rod of the lower piston is stopped by the stop wall and, as a result, the lower piston 3 is moved upwardly inside the chamber up to the upper rim of the chamber. As illustrated, when the lower piston 3 is in its upper position in the chamber, the coffee cake 92 is positioned above the upper rim of the chamber and can be swept away. Simultaneously the inlet 311a of the internal channel of the rod 31 creates an outlet for waste liquid 72 present in the chamber. This liquid 72 is evacuated through the rod and emerges from the outlet 311b.

In a last step e), the chamber 1, the upper piston 2 and the lower piston 3 are moved relatively one to the other in order to close the chamber with the result of keeping the chamber warm for the prepation of the next coffee beverage.

**Figure 6** illustrates schematically the hot water fluid system with a coffee extraction unit 10 according to the invention. The line comprises successively at least:
- a cold water tank 101,
- a flowmeter 103,
- a pump 102
- a heater 104,
- a valve 105,
- a final hot water fluid line 7 connected to the water inlet of the brewing chamber part of the coffee extraction unit 10.

Waste liquid retained at the bottom of the brewing chamber 1 after a coffee extraction is evacuated through the rod of the lower piston directly to a collector of waste liquid. The inlet of the discharge channel created in the rod of the lower piston acts as a passive valve that opens automatically when the lower piston is in its higher position inside the brewing chamber. All water in the dead volume can be drained out towards a waste liquid collector like the drip tray.

This passive valve enables the implementation of steps of improving the preparation of the first coffee beverages prepared after a long period during which no coffee beverage has been prepared with the consequence that the brewing chamber and the water retained in the water supply line are cold.

In particular, when no coffee has been prepared for a certain time, certain additional steps can be implemented for the first new prepared coffee. This certain time can be for example 15 minutes, but it may be possible for the operator to define this period in a setting menu of the machine since machines can differ in their environment (hot or cold) and construction.

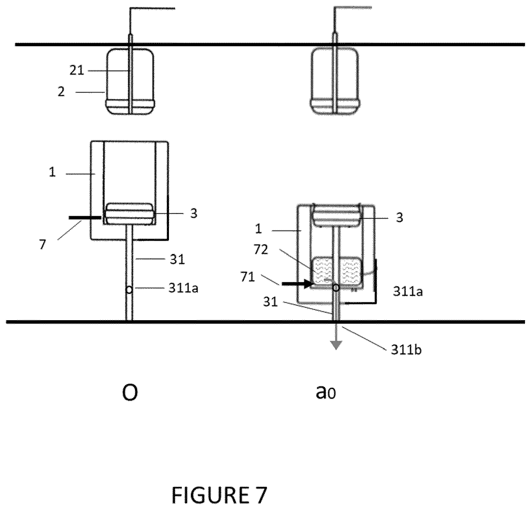

**Figure 7** illustrates an additional step a₀) that can be implemented before preparing a new coffee in order to improve the temperature of supplied water if no coffee has been prepared for a certain period.

Starting from the illustrated dosing position O) wherein the lower piston 2 is in the lowest position inside the brewing chamber and the upper piston 3 is at a distance from the upper rim 12 of the chamber, the chamber 1, the upper piston 2 and the lower piston 3 are moved one relatively to the other in order to :
- position the upper rim 12 of the chamber away from the upper piston 2, and
- position the lower piston 3 at the upper rim 12 of the brewing chamber.

Then hot water 71 is introduced through the water inlet 1 in order to purge the hot water fluid line 7. Since the inlet 311a of the internal channel of the rod 31 creates an outlet for liquid present in the chamber, introduced water 71 is evacuated immediately through the rod and emerges from the outlet 311b. As result, cold water retained in the water supply line is removed before a new coffee beverage is prepared.

Then, the coffee preparation can start as illustrated by the steps of Figure 5 after positioning the different elements of the brewing chamber in the dosing position.

When no beverage is prepared during a certain time, the control unit of the coffee machine can be configured to automatically move the brewing unit 1 to the position illustrated in step a₀) of Figure 7 in order to be ready to purge cold water from the water supply line 7 when a coffee will be ordered.

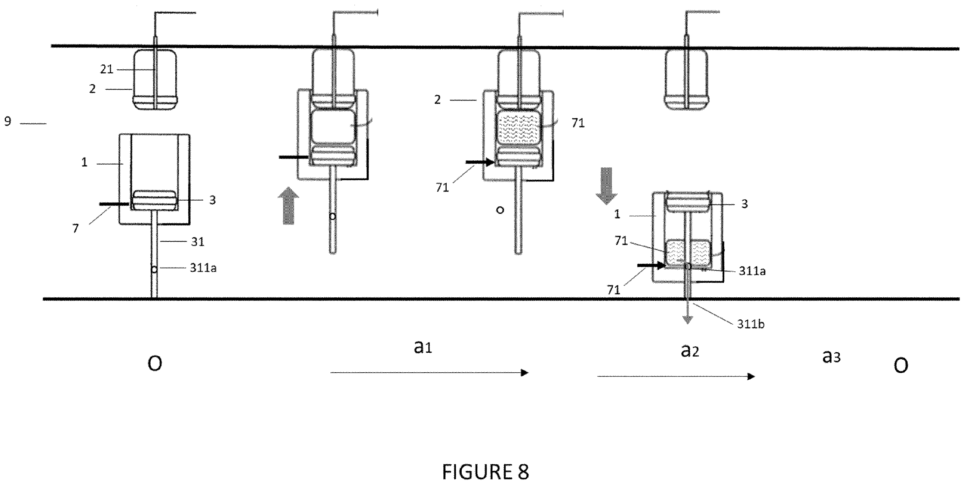

**Figure 8** illustrates other additional steps that can implemented before preparing a new coffee in order to improve the temperature of supplied water if no coffee has been prepared for a certain period. These steps can be implemented after step a₀) or independently ; it may depend on the location of the coffee machine and in particular on the external environmental conditions.

Starting from the illustrated dosing position O) wherein the lower piston 3 is in the lowest position inside the brewing chamber and the upper piston 2 is at a distance from the upper rim 12 of the chamber, in a step a₁) the chamber 1, the upper piston 2 and the lower piston 3 are moved one relatively to the other in order to :
- close the chamber 1 with the upper piston 2, and
- position the lower piston 3 inside the brewing chamber 1 so that the channel inlet 311a) of the internal channel is positioned below the bottom wall 11 of the chamber. In these positions of the different elements of the unit 10, the brewing chamber is closed and no liquid can drain from the bottom.

Then hot water is introduced through the water inlet 13 inside the internal volume of the brewing chamber defines by the upper and lower pistons in order to fill at least a part of the internal volume of the brewing chamber defined between the upper piston 2 and the lower piston 3.

Then hot water 71 is kept inside the brewing chamber with the effect of pre-heating the chamber. A small volume of hot water presenting a temperature comprised between 80 and 95°C can be kept in the chamber during a time sufficient to pre-heat the chamber as if a coffee had been prepared recently. For example, 25 ml of water at 80 - 95°C kept for 15 seconds inside a plastic coffee espresso chamber of a diameter 45 mm were sufficient to pre-heat said chamber for the preparation of a first coffee.

After this pause, in a step a₂), the chamber 1, the upper piston 2 and the lower piston 3 are moved one to the other in order to position the lower piston 3 at the upper rim 12 of the brewing chamber, in order to dispense the volume of hot water through the internal channel 311 of the lower piston. Then, in this position, hot water is introduced through the water inlet 13 in order to purge the hot water fluid line 7 and this hot water is immediately evacuated through the internal channel 311 of the lower piston.

Then, in a step a₃), the chamber 1, the upper piston 2 and the lower piston 3 are moved one relatively to the other to the dosing position O), before a coffee preparation starts, as illustrated in Figure 5.

The effect of heating the chamber with hot water and purging the hot water supply line from stagnating water improves drastically the preparation of the first cups of coffee after the machine is cold and has not dispensed coffee for a certain time.

The time of preparation of the first coffee with the sequence of pre-warming the chamber increases the time of preparation by less than 20 seconds. The first coffee presents the same organoleptic properties as following coffees prepared from the warm chamber.

The present invention presents the advantage of enabling the upgrade of existing machines by simply replacing the lower piston of the chamber by a new piston and adapting the software of the control unit of the machine commanding the movement of the brewing chamber and the dispensing of water. This upgrade does not increase the machine cost and can be implementable easily.

Another advantage is that new full automatic coffee machines can be produced with a simple one-way valve in place of the three-way valve in the hot water supply line which reduces the costs of production. Moreover, the invention prevents residual water to flow back to this one-way valve with the risk of clogging or bad sealing of this valve after a certain time.

Another advantage is that the removal of waste liquid from the chamber through the rod of the piston does not create a discharge of a splashing volume of coffee beverage generated in the prepared cup as observed during the opening of a three-way valve according to prior arts (due to drop of pressure). The drainage of the chamber is not perceived by the coffee consumer.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

**List of references in the drawings :**

| | | | |
|---|---|---|---|
| coffee extraction unit | | | 10 |
| brewing chamber | | | 1 |
| bottom wall | | | 11 |
| upper rim | | | 12 |
| water inlet | | | 13 |
| upper piston | | | 2 |
| | outlet duct | | 21 |
| lower piston | | | 3 |
| | piston rod | | 31 |
| | internal channel | | 311 |
| | | inlet | 311a |
| | | outlet | 311b |
| | head | | 32 |
| | friction means | | 33 |
| | water outlets | | 34 |
| discharge device | | | 4 |
| bottom stop wall | | | 5 |
| channel | | | 51 |
| driving means | | | 6 |
| hot water fluid line | | | 7 |
| water | | | 71 |
| residual liquid | | | 72 |
| liquid collector | | | 8 |
| roasted and ground coffee | | | 9 |
| coffee beverage | | | 91 |
| coffee cake | | | 92 |
| coffee machine | | | 100 |
| water tank | | | 101 |
| pump | | | 102 |
| flow meter | | | 103 |
| heater | | | 104 |
| valve | | | 105 |
| three-way valve | | | 106 |

## Claims

1. Full automatic coffee machine (100) comprising a coffee extraction unit (10), said coffee extraction unit comprising :
- a brewing chamber (1) for receiving roasted and ground coffee powder, said chamber comprising an upper rim (12), a bottom wall (11) and a water inlet (13),
- an upper piston (2),
. said upper piston being configured to be movable through the upper rim of the brewing chamber and inside the brewing chamber further to the relative movement of the brewing chamber and the upper piston, and
. said upper piston comprising a liquid outlet duct (21),
- a lower piston (3) movable inside said brewing chamber (1) between :
. a lowest position wherein the lower piston lies on the bottom wall (11) of the brewing chamber, and
. a highest position wherein the lower piston is at the upper rim (12) of the brewing chamber,
- wherein the lower piston (3) comprises a piston rod (31), said piston rod extending through the bottom wall (11) of the brewing chamber, and
**characterized in that** the piston rod (31) comprises an internal channel (311) extending from a channel inlet (311a) at the lateral wall surface of the rod to a channel outlet (311b) at the bottom wall surface of the rod, and
wherein the channel inlet (311a) is designed and positioned on the lateral wall surface of the rod so that said channel inlet (311a) overlaps the bottom wall (11) of the brewing chamber only when the lower piston is in the higher position.

2. Full automatic coffee machine according to Claim 1, wherein the machine comprises a waste liquid collector (8) and the channel outlet (311b) at the bottom wall surface of the rod is connected to said waste liquid collector.

3. Full automatic coffee machine according to Claim 1 or 2, wherein the brewing chamber (1) is made movable by driving means (6)

4. Full automatic coffee machine according to the precedent claim, wherein :
- the upper piston (2) is fixed,
- the rod (31) of the lower piston comprises a free bottom end (312) located outside the brewing chamber (1) and movable with said piston and said chamber,
- the apparatus comprises a fixed bottom stop wall (5) configured to contact the bottom end of the rod of the lower piston,
- the movement of the lower piston (3) depends on the movement of the brewing chamber and/or the contact of the free bottom end (312) with the bottom stop wall (4) or the contact of the lower piston (3) with the upper piston (2).

5. Full automatic coffee machine according to any of the precedent claims, wherein the rod (31) and/or the lower pistons (3) are provided with friction means to control their movement with respect to the internal walls of the brewing chamber.

6. Full automatic coffee machine according to Claim 4 or 5 when dependent on claim 4, wherein the fixed bottom stop wall (5) comprises a channel (51) configured to connect the channel outlet (311b) of the internal channel of the rod with a draining pipe.

7. Full automatic coffee machine according to Claim 1, wherein the brewing chamber (1) is fixed and the upper and lower pistons (2, 3) are movable inside and out of the brewing chamber by driving means.

8. Full automatic coffee machine according to any of the precedent claims, wherein the apparatus comprises a discharge device (4) for spent coffee

9. Full automatic coffee machine according to any of the precedent claims wherein the apparatus comprises a pressurized hot water fluid system comprising at least a water supply, a water heating device and a water pump wherein said system is connected to the water inlet (13) of the brewing chamber.

10. Method for preparing a coffee beverage with a full automatic coffee apparatus according to any one of Claims 1 to 9, wherein said method comprises the steps of :
a- in a dosing position, wherein the lower piston (3) is in the lowest position inside the brewing chamber and the upper piston (2) is at a distance from the upper rim (12) of the chamber and outside the chamber, supplying a dose of roasted and ground coffee powder into the brewing chamber, then
b- moving the chamber (1) and the upper piston (2) relatively one to the other to compress the dose of coffee powder, then
c - introducing hot water through the water inlet (13), extracting the coffee powder and dispensing extracted coffee beverage through the beverage outlet (21) of the upper piston, then
d- moving the chamber (1), the upper piston (2) and the lower piston (3) relatively one to the other in order to :
. position the upper rim (12) of the chamber away from the upper piston (2), and
. position the lower piston (3) at the upper rim (12) of the brewing chamber, and
. discharging the extracted coffee powder from the lower piston, and
. dispensing residual liquid present at the bottom of the chamber through the internal channel (311) of the rod of the lower piston.

11. Method according to the precedent claim, wherein said method comprises, after step d), at least one further step e) comprising the step of moving the chamber (1), the upper piston (3) and the lower piston (2) relatively one to the other in a closed position, wherein the lower piston is in the lowest position and the upper piston closes the chamber.

12. Method according to Claim 10 or 11, wherein said method comprise at least one further step before step a) is implemented, this step comprising :
a₀- moving the chamber (1), the upper piston (2) and the lower piston (3) relatively one to the other in order to :
. position the upper rim (12) of the chamber away from the upper piston (2), and
. position the lower piston (3) at the upper rim (12) of the brewing chamber, and
. introducing hot water through the water inlet (13) in order to purge the hot water fluid line (7) and dispensing said hot water through the internal channel (311) of the lower piston.

13. Method according to any one of Claims 10 to 12, wherein said method comprises further steps before step a) is implemented, these steps comprising :
a₁- moving the chamber (1), the upper piston (2) and the lower piston (3) relatively one to the other in order to :
. close the chamber (1) with the upper piston (2), and
. position the lower piston (3) inside the brewing chamber (1) so that the channel inlet (311a) of the internal channel is positioned below the bottom wall (11) of the chamber, and
. introducing hot water through the water inlet (13) in order to fill at least a part of the internal volume of the brewing chamber defined between the upper piston (2) and the lower piston (3),
then
a₂- moving the chamber (1), the upper piston (2) and the lower piston (3) relatively one to the other in order to position the lower piston (3) at the upper rim (12) of the brewing chamber, in order to dispense said volume of hot water through the internal channel (311) of the lower piston, then
a₃- moving the chamber (1), the upper piston (2) and the lower piston (3) relatively one to the other to the dosing position.

## Patentansprüche

1. Vollautomatische Kaffeemaschine (100) umfassend eine Kaffeeextraktionseinheit (10), die Kaffeeextraktionseinheit umfassend:
- eine Brühkammer (1) für die Aufnahme von geröstetem und gemahlenem Kaffeepulver, die Kammer umfassend einen oberen Rand (12), eine Bodenwand (11) und einen Wassereinlass (13),
- einen oberen Kolben (2),
. wobei der obere Kolben konfiguriert ist, um durch den oberen Rand der Brühkammer und im Inneren der Brühkammer weiter zu der relativen Bewegung der Brühkammer und des oberen Kolbens beweglich zu sein, und
. der obere Kolben umfassend einen Flüssigkeitsauslasskanal (21),
- einen unteren Kolben (3), der im Inneren der Brühkammer (1) beweglich ist zwischen:
. einer untersten Position, in der der untere Kolben auf der Bodenwand (11) der Brühkammer aufliegt, und
. einer höchsten Position, wobei der untere Kolben an dem oberen Rand (12) der Brühkammer ist,
- wobei der untere Kolben (3) eine Kolbenstange (31) umfasst, wobei sich die Kolbenstange durch die Bodenwand (11) der Brühkammer erstreckt, und
**dadurch gekennzeichnet, dass** die Kolbenstange (31) einen inneren Kanal (311) umfasst, der sich von einem Kanaleinlass (311a) an der seitlichen Wandoberfläche der Stange zu einem Kanalauslass (311b) an der unteren Wandoberfläche der Stange erstreckt, und
wobei der Kanaleinlass (311a) auf der seitlichen Wandoberfläche der Stange so gestaltet und positioniert ist, dass der Kanaleinlass (311a) die Bodenwand (11) der Brühkammer nur dann überlappt, wenn der untere Kolben in der höheren Position ist.

2. Vollautomatische Kaffeemaschine nach Anspruch 1, wobei die Maschine einen Abfallflüssigkeitssammler (8) umfasst und der Kanalauslass (311b) an der unteren Wandoberfläche der Stange mit dem Abfallflüssigkeitssammler verbunden ist.

3. Vollautomatische Kaffeemaschine nach Anspruch 1 oder 2, wobei die Brühkammer (1) durch Antriebsmittel (6) beweglich gemacht ist.

4. Vollautomatische Kaffeemaschine nach dem vorstehenden Anspruch, wobei:
- der obere Kolben (2) feststehend ist,
- die Stange (31) des unteren Kolbens ein freies unteres Ende (312) umfasst, das sich außerhalb der Brühkammer (1) befindet und mit dem Kolben und der Kammer beweglich ist,
- die Einrichtung eine feststehende untere Anschlagswand (5) umfasst, die konfiguriert ist, um das untere Ende der Stange des unteren Kolbens zu berühren,
- die Bewegung des unteren Kolbens (3) von der Bewegung der Brühkammer und/oder der Berührung des freien unteren Endes (312) mit der unteren Anschlagswand (4) oder der Berührung des unteren Kolbens (3) mit dem oberen Kolben (2) abhängig ist.

5. Vollautomatische Kaffeemaschine nach einem der vorstehenden Ansprüche, wobei die Stange (31) und/oder die unteren Kolben (3) mit Reibungsmitteln bereitgestellt sind, um ihre Bewegung in Bezug auf die inneren Wände der Brühkammer zu steuern.

6. Vollautomatische Kaffeemaschine nach Anspruch 4 oder 5, wenn abhängig von Anspruch 4, wobei die feststehende untere Anschlagswand (5) einen Kanal (51) umfasst, der konfiguriert ist, um den Kanalauslass (311b) des inneren Kanals der Stange mit einem Abflussrohr zu verbinden.

7. Vollautomatische Kaffeemaschine nach Anspruch 1, wobei die Brühkammer (1) feststehend ist und der obere und der untere Kolben (2, 3) im Inneren der Brühkammer und aus dieser heraus durch Antriebsmittel beweglich sind.

8. Vollautomatische Kaffeemaschine nach einem der vorstehenden Ansprüche, wobei die Einrichtung eine Ablassvorrichtung (4) für verbrauchten Kaffee umfasst.

9. Vollautomatische Kaffeemaschine nach einem der vorstehenden Ansprüche, wobei die Einrichtung ein druckbeaufschlagtes Heißwasserfluidsystem umfasst, umfassend mindestens eine Wasserzuführung, eine Wassererhitzungsvorrichtung und eine Wasserpumpe, wobei das System mit dem Wassereinlass (13) der Brühkammer verbunden ist.

10. Verfahren zum Zubereiten eines Kaffeegetränks mit einer vollautomatischen Kaffeemaschine nach einem der Ansprüche 1 bis 9, wobei das Verfahren die Schritte umfasst:
a- in einer Dosierposition, wobei der untere Kolben (3) in der untersten Position im Inneren der Brühkammer ist, und der obere Kolben (2) in einem Abstand von dem oberen Rand (12) der Kammer und außerhalb der Kammer ist, Zuführen einer Dosis von geröstetem und gemahlenem Kaffeepulver in die Brühkammer, dann
b- Bewegen der Kammer (1) und des oberen Kolbens (2) relativ zueinander, um die Kaffeepulverdosis zu komprimieren, dann
c- Einleiten von heißem Wasser durch den Wassereinlass (13), Extrahieren des Kaffeepulvers und Ausgeben des extrahierten Kaffeegetränks durch den Getränkeauslass (21) des oberen Kolbens, dann
d- Bewegen der Kammer (1), des oberen Kolbens (2) und des unteren Kolbens (3) relativ zueinander, zum:
. Positionieren des oberen Rands (12) der Kammer von dem oberen Kolben (2) weg und
. Positionieren des unteren Kolbens (3) an dem oberen Rand (12) der Brühkammer und
. Ablassen des extrahierten Kaffeepulver aus dem unteren Kolben, und
. Ausgeben von Restflüssigkeit, die auf dem Boden der Kammer vorhanden ist, durch den inneren Kanal (311) der Stange des unteren Kolbens.

11. Verfahren nach dem vorstehenden Anspruch, wobei das Verfahren nach Schritt d) mindestens einen weiteren Schritt e) umfasst, der den Schritt des Bewegens der Kammer (1), des oberen Kolbens (3) und des unteren Kolbens (2) relativ zueinander in eine geschlossene Position umfasst, wobei sich der untere Kolben in der untersten Position befindet und der obere Kolben die Kammer schließt.

12. Verfahren nach Anspruch 10 oder 11, wobei das Verfahren mindestens einen weiteren Schritt, bevor Schritt a) implementiert wird, umfasst, dieser Schritt umfassend:
a₀- Bewegen der Kammer (1), des oberen Kolbens (2) und des unteren Kolbens (3) relativ zueinander, zum:
. Positionieren des oberen Rands (12) der Kammer von dem oberen Kolben (2) weg und
. Positionieren des unteren Kolbens (3) an dem oberen Rand (12) der Brühkammer und
. Einleiten von heißem Wasser durch den Wassereinlass (13), um die Heißwasserfluidleitung (7) zu spülen, und Abgeben des heißen Wassers durch den inneren Kanal (311) des unteren Kolbens.

13. Verfahren nach einem der Ansprüche 10 bis 12, wobei das Verfahren weitere Schritte umfasst, bevor Schritt a) implementiert wird, diese Schritte umfassend:
a₁- Bewegen der Kammer (1), des oberen Kolbens (2) und des unteren Kolbens (3) relativ zueinander zum:
. Schließen der Kammer (1) mit dem oberen Kolben (2) und
. Positionieren des unteren Kolbens (3) im Inneren der Brühkammer (1), sodass der Kanaleinlass (311a) des inneren Kanals unterhalb der Bodenwand (11) der Kammer positioniert ist, und
. Einleiten von heißem Wasser durch den Wassereinlass (13), um mindestens einen Teil des inneren Volumens der Brühkammer zu füllen, das zwischen dem oberen Kolben (2) und dem unteren Kolben (3) definiert ist,
dann
a₂- Bewegen der Kammer (1), des oberen Kolbens (2) und des unteren Kolbens (3) relativ zueinander, um den unteren Kolben (3) an dem oberen Rand (12) der Brühkammer zu positionieren, um das Volumen an heißem Wasser durch den inneren Kanal (311) des unteren Kolbens auszugeben, dann
a₃- Bewegen der Kammer (1), des oberen Kolbens (2) und des unteren Kolbens (3) relativ zueinander in die Dosierposition.

## Revendications

1. Machine à café entièrement automatique (100) comprenant une unité d'extraction de café (10), ladite unité d'extraction de café comprenant :
- une chambre d'infusion (1) destinée à recevoir de la poudre de café torréfié et moulu, ladite chambre comprenant un bord supérieur (12), une paroi inférieure (11) et une entrée d'eau (13),
- un piston supérieur (2),
. ledit piston supérieur étant conçu pour être mobile à travers le bord supérieur de la chambre d'infusion et à l'intérieur de la chambre d'infusion suite au mouvement relatif de la chambre d'infusion et du piston supérieur, et
. ledit piston supérieur comprenant un conduit de sortie de liquide (21),
- un piston inférieur (3) mobile à l'intérieur de ladite chambre d'infusion (1) entre :
. une position la plus basse dans laquelle le piston inférieur repose sur la paroi inférieure (11) de la chambre d'infusion, et
. une position la plus haute dans laquelle le piston inférieur se trouve au niveau du bord supérieur (12) de la chambre d'infusion,
- dans lequel le piston inférieur (3) comprend une tige de piston (31), ladite tige de piston s'étendant à travers la paroi inférieure (11) de la chambre d'infusion, et
**caractérisée en ce que** la tige de piston (31) comprend un canal interne (311) s'étendant depuis une entrée de canal (311a) au niveau de la surface de paroi latérale de la tige vers une sortie de canal (311b) au niveau de la surface de paroi inférieure de la tige, et
dans lequel l'entrée de canal (311a) est conçue et positionnée sur la surface de paroi latérale de la tige de sorte que ladite entrée de canal (311a) chevauche la paroi inférieure (11) de la chambre d'infusion uniquement lorsque le piston inférieur est en position la plus haute.

2. Machine à café entièrement automatique selon la revendication 1, dans laquelle la machine comprend un collecteur de liquide usé (8) et la sortie de canal (311b) au niveau de la surface de paroi inférieure de la tige est reliée audit collecteur de liquide usé.

3. Machine à café entièrement automatique selon la revendication 1 ou 2, dans laquelle la chambre d'infusion (1) est rendue mobile par un moyen d'entraînement (6)

4. Machine à café entièrement automatique selon la revendication précédente, dans laquelle :
- le piston supérieur (2) est fixe,
- la tige (31) du piston inférieur comprend une extrémité inférieure libre (312) située à l'extérieur de la chambre d'infusion (1) et mobile avec ledit piston et ladite chambre,
- l'appareil comprend une paroi de butée inférieure fixe (5) conçue pour entrer en contact avec l'extrémité inférieure de la tige du piston inférieur,
- le mouvement du piston inférieur (3) dépend du mouvement de la chambre d'infusion et/ou du contact de l'extrémité inférieure libre (312) avec la paroi de butée inférieure (4) ou du contact du piston inférieur (3) avec le piston supérieur (2).

5. Machine à café entièrement automatique selon l'une quelconque des revendications précédentes, dans laquelle la tige (31) et/ou les pistons inférieurs (3) sont dotés de moyen de friction pour commander leur mouvement par rapport aux parois internes de la chambre d'infusion.

6. Machine à café entièrement automatique selon la revendication 4 ou 5 lorsqu'elle dépend de la revendication 4, dans laquelle la paroi d'arrêt inférieure fixe (5) comprend un canal (51) conçu pour relier la sortie de canal (311b) du canal interne de la tige à un tuyau d'évacuation.

7. Machine à café entièrement automatique selon la revendication 1, dans laquelle la chambre d'infusion (1) est fixe et les pistons supérieur et inférieur (2, 3) sont mobiles à l'intérieur et à l'extérieur de la chambre d'infusion par un moyen d'entraînement.

8. Machine à café entièrement automatique selon l'une quelconque des revendications précédentes, dans laquelle l'appareil comprend un dispositif de décharge (4) du café usé

9. Machine à café entièrement automatique selon l'une quelconque des revendications précédentes, dans laquelle l'appareil comprend un système de fluide d'eau chaude sous pression comprenant au moins une fourniture d'eau, un dispositif de chauffage d'eau et une pompe à eau, dans laquelle ledit système est relié à l'entrée d'eau (13) de la chambre d'infusion.

10. Procédé de préparation d'une boisson de café avec un appareil à café entièrement automatique selon l'une quelconque des revendications 1 à 9, dans lequel ledit procédé comprend les étapes consistant à :
a- dans une position de dosage, dans laquelle le piston inférieur (3) est en position la plus basse à l'intérieur de la chambre d'infusion et le piston supérieur (2) est à distance du bord supérieur (12) de la chambre et à l'extérieur de la chambre, fournir une dose de poudre de café torréfié et moulu dans la chambre d'infusion, puis
b- déplacer la chambre (1) et le piston supérieur (2) relativement l'un par rapport à l'autre pour comprimer la dose de café en poudre, puis
c- introduire de l'eau chaude par l'entrée d'eau (13), extraire la poudre de café et distribuer la boisson de café extraite par la sortie de boisson (21) du piston supérieur, puis
d- déplacer la chambre (1), le piston supérieur (2) et le piston inférieur (3) relativement les uns par rapport aux autres afin de :
. positionner le bord supérieur (12) de la chambre à l'écart du piston supérieur (2), et
. positionner le piston inférieur (3) au niveau du bord supérieur (12) de la chambre d'infusion, et
. décharger la poudre de café extraite du piston inférieur, et
. distribuer le liquide résiduel présent au fond de la chambre par le canal interne (311) de la tige du piston inférieur.

11. Procédé selon la revendication précédente, dans lequel ledit procédé comprend, après l'étape d), au moins une étape supplémentaire e) comprenant l'étape consistant à déplacer la chambre (1), le piston supérieur (3) et le piston inférieur (2) relativement les uns par rapport aux autres dans une position fermée, dans lequel le piston inférieur est dans la position la plus basse et le piston supérieur ferme la chambre.

12. Procédé selon la revendication 10 ou 11, dans lequel ledit procédé comprend au moins une étape supplémentaire avant la mise en oeuvre de l'étape a), cette étape comprenant :
a₀- le déplacement de la chambre (1), du piston supérieur (2) et du piston inférieur (3) relativement les uns par rapport aux autres afin de :
. positionner le bord supérieur (12) de la chambre à l'écart du piston supérieur (2), et
. positionner le piston inférieur (3) au niveau du bord supérieur (12) de la chambre d'infusion, et
. introduire de l'eau chaude par l'entrée d'eau (13) afin de purger la conduite de fluide d'eau chaude (7) et distribuer ladite eau chaude par le canal interne (311) du piston inférieur.

13. Procédé selon l'une quelconque des revendications 10 à 12, dans lequel ledit procédé comprend des étapes supplémentaires avant la mise en oeuvre de l'étape a), ces étapes comprenant :
a₁- le déplacement de la chambre (1), du piston supérieur (2) et du piston inférieur (3) relativement les uns par rapport aux autres afin de :
. fermer la chambre (1) avec le piston supérieur (2), et
. positionner le piston inférieur (3) à l'intérieur de la chambre d'infusion (1) de sorte que l'entrée de canal (311a) du canal interne est positionnée sous la paroi de fond (11) de la chambre, et
. l'introduction de l'eau chaude par l'entrée d'eau (13) afin de remplir au moins une partie du volume interne de la chambre d'infusion définie entre le piston supérieur (2) et le piston inférieur (3),
puis
a₂- le déplacement de la chambre (1), du piston supérieur (2) et du piston inférieur (3) relativement les uns par rapport aux autres afin de positionner le piston inférieur (3) au niveau du bord supérieur (12) de la chambre d'infusion, afin de distribuer ledit volume d'eau chaude par le canal interne (311) du piston inférieur, puis
a₃- le déplacement de la chambre (1), du piston supérieur (2) et du piston inférieur (3) relativement les uns par rapport aux autres jusqu'à la position de dosage.
